# EUROPEAN PATENT APPLICATION

(11) **EP 2 529 911 A1**
(43) Date of publication of application: **05.12.2012**
(21) Application number: 11168451.0
(22) Date of filing: 01.06.2011
(51) Int. Cl.: B29C 45/00, B29C 45/16, B29C 45/04

(54) **Hollow element assembly and method and apparatus for the manufacture thereof**

(71) Applicant: Barkley Plastics Limited, Birmingham B12 0XR (GB)
(72) Inventor: Cassidy, Maurice, Birmingham, B12 0XR (GB); Anstey, Justin, Birmingham, B12 0XR (GB)
(74) Representative: Pugsley, Victoria Antonietta

(57) **Abstract**

A hollow element assembly has a base and a lid. The base has a wall that at least partly defines a recess, and the lid is locatable on the base so as to further bound the recess. Location of the lid on the base is achieved by bringing an edge of the wall into abutting contact with a corresponding contacting surface on the lid. At least one of the edge of the wall and the contacting surface of the lid has a channel running therealong, such that when the lid is located on the base, a welding conduit is provided that follows the edge of the wall. At least one of the base and the lid further has an inlet aperture arranged to deliver molten welding material to the welding conduit from a region external to the hollow element assembly, so as to weld the base and the lid together, to provide a hollow element.

## Description

### Technical Field

The invention relates to hollow element assemblies for assembly into hollow elements, in particular for assembly into hollow elements for housing electronic components and/or for use in medical devices, and a method and apparatus for the manufacture thereof.

### Background

It is known to prepare two-part hollow elements through an injection moulding process. For example, GB2360243, which is hereby incorporated by reference, describes an injection moulding apparatus for hollow parts that has first and second co-operating dies.

Each die has a male die core and a female die recess. The dies are rotatable relative to each other so that they can be moved between first and second configurations. In the first configuration, the male die core of the first die is received by the female die recess of the second die, while the male die core of the second die is received by the female die recess of the first die. Thus, each male die core / female die recess pair defines a mould whose shape corresponds to one part of the hollow element assembly. Molten material is injected into each mould to form the parts.

In the second configuration, the female die recesses of the first and second dies are aligned, thus bringing the two parts of the hollow element assembly together, such that they may be joined, e.g. by a collar weld.

It is desirable to improve this process to provide a cosmetically acceptable join having good mechanical integrity.

### Statement of invention

Therefore, at its most general, the present invention may provide a multi-component hollow element assembly that may be joined to form a hollow element in which the weld is provided in an internal region of the element.

As a result, it may be possible to provide a hollow element in which the weld is not visible at an external surface. Thus, a cosmetically acceptable hollow element is provided in which only a join-line corresponding to the abutting contact of two adjacent components is visible externally.

In a first aspect, the present invention may provide a hollow element assembly for assembly into a hollow element, the hollow element assembly comprising a base and a lid, the base having a wall that at least partly defines a recess, the lid being locatable on the base so as to further bound the recess,
the hollow element assembly being arranged such that the lid is locatable on the base through the process of bringing an edge of the wall into abutting contact with a corresponding contacting surface on the lid,
wherein at least one of the edge of the wall and the contacting surface of the lid has a channel running therealong, such that when the lid is located on the base, a welding conduit is provided that follows the edge of the wall,
at least one of the base and the lid further having an inlet aperture arranged to deliver molten welding material to the welding conduit from a region external to the hollow element assembly, so as to weld the base and the lid together, to provide a hollow element.

As a consequence of the configuration of the lid and the base, positioning of the lid on the base results in the formation of an internal welding conduit that is situated within the abutting surfaces of the base and the lid. Thus, it may be possible to deliver welding material to the welding conduit in such a way that the welding material is not visible on the external surface of the resultant hollow element.

The terms "lid" and "base" merely refer to the typical functions of the two components of the hollow assembly. They do not imply any fixed orientation of the assembly, or the resultant hollow element.

Typically, the hollow element assembly further comprises an outlet aperture that is spaced from the inlet aperture and arranged to allow excess welding material to exit the welding conduit.

Typically, the inlet and outlet apertures are both located on the same part of the hollow element assembly e.g. the base. In general, the inlet and outlet apertures are located opposite each other.

Typically, both the edge of the wall and the contacting surface of the lid have a channel running therealong, such that abutting contact between the edge of the wall and the contacting surface of the lid results in merging of the two channels to provide a single welding conduit.

In certain embodiments, the edge of the wall and the contacting surface of the lid are additionally configured to provide an interlocking arrangement that is preferably situated inwardly of the welding conduit (that is, located between the welding conduit and the recess). Typically such an interlocking arrangement comprises a protrusion provided on one of the wall edge and the contacting surface, and a corresponding depression provided on the other of the wall edge and the contacting surface.

For example, the contacting surface of the lid may have a triangular-shaped ridge extending therealong. The edge of the wall may have a corresponding V-shaped trough for engaging with the triangular-shaped ridge.

This interlocking arrangement may help to prevent overspill of welding material from the welding channel into the recess. Furthermore, it may help to prevent distortion of the internal surface of the recess during the welding process, and may also assist with positioning the lid on the base.

The lid and the base may be formed from the same or different materials. Suitable materials include: polycarbonate, polycarbonate/ABS blend, nylon 12 or 35% glass-filled, high temperature nylon, although it will be appreciated by the skilled man that any other material of suitable properties may be used. Typically, the materials used are polymeric.

In a second aspect, the present invention may provide an apparatus for manufacturing a hollow element assembly according to the first aspect of the invention and for joining the hollow element assembly to form a hollow element, the apparatus comprising first and second dies,
the first and second dies having respective die faces that are positioned facing each other, the first and second dies being movable across each other and additionally towards and away from each other,
the first and second dies each having at least one female die cavity and at least one male die core,
the apparatus further having fluid delivery means for delivering fluid to at least one of the first and second die faces,
wherein, in a first configuration, the female die cavity in the first die receives the male die core of the second die to define a first mould, and the female die cavity in the second die receives the male die core of the first die, to define a second mould, the first and second moulds being adapted to receive fluid from the fluid delivery means, to create moulded parts; and
wherein, in a second configuration, the female die cavities of the first and second dies are aligned with each other to define a third mould that is adapted to receive fluid from the fluid delivery means, to join the moulded parts.

The apparatus is configured for the manufacture of a hollow element assembly according to the first aspect of the invention. Thus, the first mould has the shape of one of the components of the hollow element assembly e.g. the lid, while the second mould has the shape of the other component of the hollow element assembly, e.g. the base.

Typically, the first die has a fixed position, while the second die is movable. The apparatus may be configured to allow the first and second dies to move across each other along a rotational path or a linear path. Movement along a linear path is preferred.

In general, movement of the dies is achieved through hydraulically-powered means.

Typically, the fluid delivery means comprise a single injection device in fluid communication with both the male die core and the female die recess of one of the dies (e.g. a die that is fixed in position). Thus, molten material may be supplied to the first and second moulds from the single injection device. In this case, the apparatus may be generally known as a "single shot" machine. "Multi shot" machines having separate fluid injection devices for delivering fluid to the different moulds may also be used, but are less preferred (of course, in the case that different materials are used for the different components of the hollow element assembly, a "multi shot" machine will be required).

The apparatus may be arranged such that when it is placed in the second configuration, a further fluid flow path may be provided to place the single injection device (or, as the case may be, one of the fluid injection devices of a "multi shot" machine) in fluid communication with the inlet aperture of the hollow element assembly, when it is located inside the third mould. This feature allows fluid for the welding process to be delivered to the inlet aperture of the hollow element assembly, without the need for an additional injection device.

Typically, one of the male die cores or the female die cavities comprises one or more pins that are positioned to create an inlet aperture (and optionally an outlet aperture) in one of the moulded parts of the hollow element assembly of the first aspect of the invention. Preferably, the one or more pins extend from one of the male die cores.

The apparatus may further comprise a pressure sensor that is adapted to receive molten material exiting an outlet aperture of a hollow element assembly when it is housed in the third mould. Such a pressure sensor may provide a signal that welding of the hollow element assembly is complete.

In a third aspect, the present invention may provide a method of manufacture of a hollow element assembly according to the first aspect of the invention and of joining the hollow element assembly to form a hollow element, the method comprising the steps of:
1. providing an apparatus according to the second aspect of the invention;
2. placing the apparatus in the first position, such that the female die cavity in the first die receives the male die core of the second die, to define a first mould, and the female die cavity in the second die receives the male die core of the first die, to define a second mould;
3. supplying molten material to the first and second moulds via the fluid delivery means to create moulded parts;
4. moving the first and second dies away from each other and subsequently across each other to the second position;
5. contacting the first and second dies, whereby the female die cavities, each containing a moulded part, are aligned with each other to define a third mould that houses the hollow element assembly formed from the moulded parts; and
6. actuating the fluid delivery means to deliver molten material to the welding conduit of the hollow element assembly and bond the base and lid of the assembly together, to provide a hollow element.

This method is for the manufacture of a hollow element assembly according to the first aspect of the invention. Thus, the first mould has the shape of one of the components of the hollow element assembly e.g. the lid, while the second mould has the shape of the other component of the hollow element assembly, e.g. the base.

Often, the method comprises the further step, between steps 4 and 5, of placing an object (e.g. an electronic device) or a filler material between the lid and base of the hollow element assembly.

Typically, the molten material delivered to the welding conduit is the same as is used to form one or other of the lid or the base of the hollow element assembly according to the first aspect of the invention. In the case that different materials are used to form the lid and the base, the molten material delivered to the welding conduit typically corresponds to the softer one of the materials used to form the lid and the base.

Preferably, the steps of supplying molten material to the first and second moulds to create moulded parts and of delivering molten material to the welding conduit are all carried out using a single injection device provided within the fluid delivery means. Different flow paths provided within the apparatus channel the fluid to its destinations, as required.

### Detailed description

Embodiments of the invention will now be described in detail by way of example only, with reference to the accompanying drawings, in which:

Figure 1 is a cross-sectional schematic representation of a hollow element assembly according to an embodiment of the first aspect of the invention and illustrating a base and a lid in a spaced arrangement;
Figure 2 is a cross-sectional schematic representation of the hollow element assembly of Figure 1 and illustrating the base and the lid in a substantially engaged arrangement;
Figure 3 is a cross-sectional schematic representation of an apparatus according to an embodiment of the second aspect of the invention, for manufacturing a hollow element assembly according to the first aspect of the invention, the apparatus being shown in a first configuration;
Figure 4 is a second version of Figure 3, showing magnified views of certain portions of the apparatus;
Figure 5 is a cross-sectional schematic representation of the apparatus of Figures 3 and 4, in a second configuration;

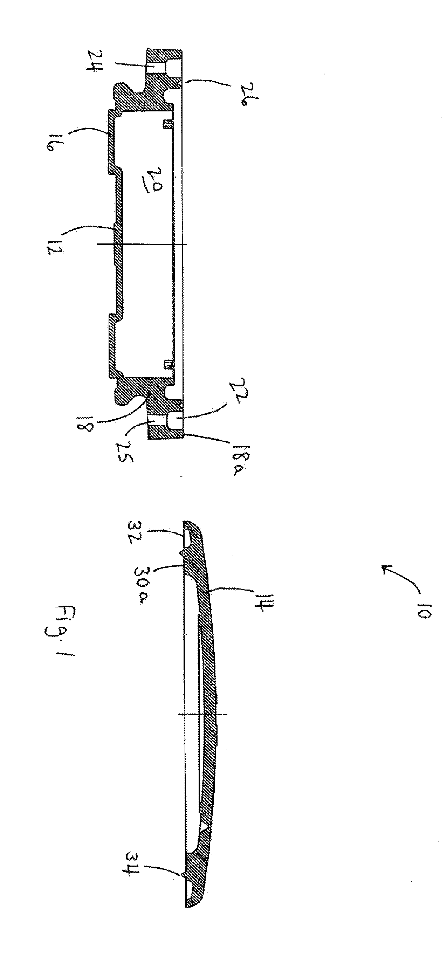

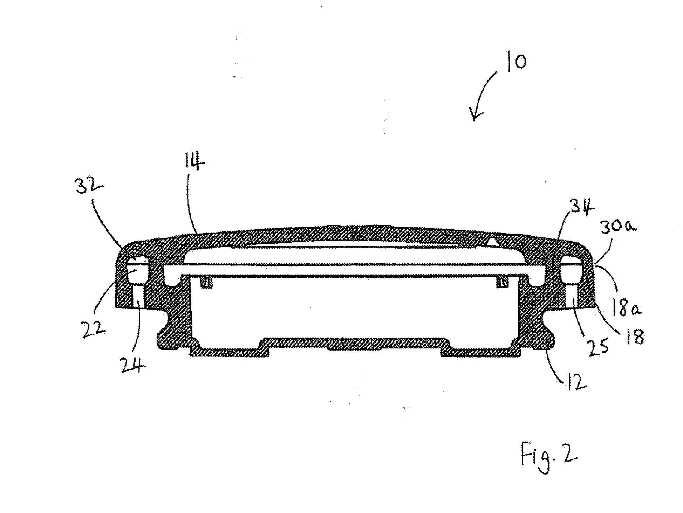

Referring to Figures 1 and 2 a hollow element assembly 10 comprises a base 12 and a lid 14.

The base 12 has a floor 16 and a wall 18 upstanding from the floor. The wall 18 extends around the perimeter of the floor 16, such that the floor and the wall define a recess 20. The wall 18 has an exposed edge 18a that faces away from the floor 16. A welding channel 22 is provided in the exposed edge 18a of the wall 18, the welding channel extending around the recess 20. An inlet aperture 24 extends along the wall 18 towards exposed edge 18a to provide fluid communication with welding channel 22. A corresponding outlet aperture 25 is provided opposite the location of the inlet aperture.

A trough 26 extends around the recess 20, radially inwardly of welding channel 22. The trough 26 has a V-shaped cross-section.

Lid 14 has a generally curved shape. The concave side of the lid has a contact surface 30a for bringing into contact with the exposed edge 18a of the wall 18. The contact surface 30a has a further welding channel 32 that extends about the perimeter of the lid 14. The lid further has a ridge 34 that extends around the lid, radially inwardly of the further welding channel 32. The ridge 34 has a triangular cross-section.

Referring to Fig. 2, the lid 14 is located on the base 12 by bringing the contact surface 30a into abutting contact with the edge 18a of the wall 18. Ridge 34 provides a locking element for engaging with corresponding trough 26, so as to prevent sliding along the abutting faces. The welding channel 22 and the further welding channel 32 together provide a welding conduit that is bounded on each side by the abutting surfaces of wall edge 18a and the lid contact surface 30a.

The lid and the base may be welded together by causing molten welding material to flow into the welding conduit via the inlet aperture 24. The welding material then flows around the welding conduit to provide bonding between the lid and the base. Any surplus welding material exits the welding conduit along the outlet aperture 25. A pressure transducer (not shown) detects exit of the welding material from the outlet aperture 25 and can thus provide a signal that sufficient welding material has been provided to the welding conduit. Suitable materials for the base 12 and the lid 14 include polycarbonate, polycarbonate/ABS blend, nylon 12 or 35% glass-filled, high temperature nylon although it will be appreciated by the skilled man that any other material of suitable properties may be used. The base and lid may be made from the same material or from different materials. The welding material typically corresponds to one of the materials used to make the base or lid. In the case that the base and lid are made of different materials, the welding material typically corresponds to the softer of the two materials.

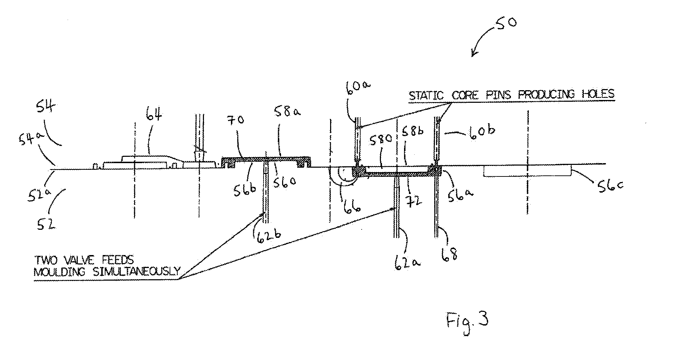

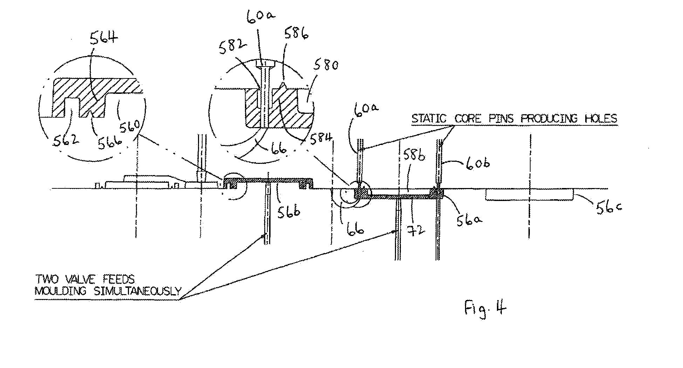

Referring to Figures 3 and 4, an apparatus 50 for manufacturing a hollow element assembly and welding it into a hollow element has a first, fixed die 52 and a second, movable die 54. The second die 54 is movable towards and away from the first die 52, as well as being movable across first die 52, along a linear path. Movement of the second die 54 is obtained through the action of hydraulic cylinders (not shown).

First and second dies 52,54 have respective first and second faces 52a,54a, and are positioned such that the faces are opposed to each other.

First die 52 has a female die cavity 56a and a male die core 56b provided at its face 52a. Similarly, second die 54 has a female die cavity 58a and a male die core 58b. First die 52 has an additional recess 56c.

The male die cores 56b,58b comprise a central generally cylindrical portion 560,580 that is situated within an outer ring portion 562,582. The central generally cylindrical portion 560,580 and the outer ring portion 562,582 define a channel 564,584 extending around the cylindrical portion.

The male die core 56b of the first die 52 additionally has a triangular shaped ridge 566 extending around the base of the channel 564. The male die core 58b of the second die 54 has a V-shaped trough 586 (corresponding in shape to the triangular shaped ridge 566) extending around the base of the channel 584.

The shape of a radially outer portion of the male die cores 56b,58b is shown in more detail in the magnified views provided with Figure 4.

Pins 60a,60b are partly embedded in the second die 54 such that they extend outwardly from the face 54a of the die, into the ring portion 582 extending around the cylindrical portion 580 of the male die core 58b.

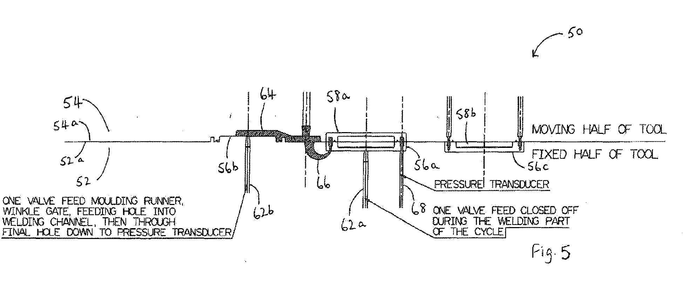

Pin 60a is shown in more detail in the magnified view of Figure 4. From this, it can be seen that pin 60a results in the formation of a corresponding inlet aperture in the base of the hollow element assembly, the inlet aperture then being in position to receive fluid from winkle gate 66, when the apparatus is in the configuration shown in Figure 5.

Two valve feeds 62a,62b are provided in the first die for delivering fluid to the female die cavity 56a and the male die core 56b respectively. An alternative fluid flow path (for use in the configuration shown in Figure 5) is provided by runner 64, situated in second die 54, and winkle gate 66, situated in the first die 52.

A pressure transducer 68 is in fluid communication with the female die cavity 56a of the first die 52.

In the configuration shown in Figures 3 and 4, the female die cavity 56a of the first die 52 is aligned with the male die core 58b of the second die 54, to define a first mould 72, having the shape of the base of the hollow element assembly (the shape of mould 72 as shown in Figs. 3 and 4 is only schematic and so does not correspond exactly to the shape of the hollow element assembly base shown in Figs. 1 and 2). The presence of outer ring 582 of male die core 58b results in the formation of a corresponding welding channel in the exposed edge of the wall of the base of the hollow element assembly, while the presence of the V-shaped channel 586 results in the formation of a corresponding triangular-shaped ridge. Similarly, the presence of pins 60a,60b protruding from the surface of the male die core 58b results in the formation of corresponding inlet and outlet apertures in the base of the hollow element assembly.

The male die core 56b of the first die 52 is aligned with the female die cavity 58a of the second die 54, to define a second mould 70, having the shape of the lid of the hollow element assembly (the shape of mould 70 as shown in Figs. 3 and 4 is only schematic and so does not correspond exactly to the shape of the hollow element assembly lid shown in Figs. 1 and 2). The presence of outer ring 562 of male die core 56b results in the formation of a corresponding welding channel in the contacting surface of the lid of the hollow element assembly, while the presence of the triangular shaped ridge 566 results in the formation of a corresponding V-shaped trough.

In the configuration shown in Figure 5, the female die cavities 56a,58a of the first and second dies 52,54 are in alignment and male die core 58b of the second die 54 is received by the additional recess 56c. Runner 64 and winkle gate 66 are in fluid communication to provide a flow path from the valve feed 62b on the male die core 56b of the first die 52 to the female die cavity 56a.

To manufacture a hollow element assembly, the two dies are initially assembled in the configuration shown in Figures 3 and 4. Molten material is introduced into valve feeds 62a,62b and flows into moulds 70,72, to produce the lid and base of the hollow element assembly.

The faces 52a,54a of the two dies 52,54 are then moved away from each other. Pressure pads (not shown) provided on the generally cylindrical portion 580 of male die core 58b ensure separation of the moulded part from the male die core 58b, such that the moulded part is retained in the female die cavity 56a of the first die 52.

The second die 54 is moved linearly in a direction parallel to its face and brought back into contact with the first die 52 in the configuration shown in Figure 5. In this configuration, the lid and base of the hollow element assembly are brought into contact. Valve feed 62a in fluid communication with female die cavity 56a is closed off. Valve feed 62b supplies molten material along runner 64 and winkle gate 66 to inlet aperture of the hollow element assembly. The molten material flows along the welding channel provided between the lid and base, exiting the channel at the outlet aperture. The flow of material from the outlet channel is sensed by the pressure transducer 68, indicating that the welding cycle is complete.

## Claims

1. A hollow element assembly (10) for assembly into a hollow element, the hollow element assembly comprising a base (12) and a lid (14), the base having a wall (18) that at least partly defines a recess (20), the lid (14) being locatable on the base (12) so as to further bound the recess (20),
the hollow element assembly (10) being arranged such that the lid (14) is locatable on the base (12) through the process of bringing an edge (18a) of the wall (18) into abutting contact with a corresponding contacting surface (30a) on the lid,
**characterised in that** at least one of the edge (18a) of the wall (18) and the contacting surface (30a) of the lid (14) has a channel (22,32) running therealong, such that when the lid is located on the base, a welding conduit is provided that follows the edge of the wall,
at least one of the base (12) and the lid (14) further having an inlet aperture (24) arranged to deliver molten welding material to the welding conduit from a region external to the hollow element assembly, so as to weld the base and the lid together, to provide a hollow element.

2. A hollow element assembly as claimed in claim 1, wherein the hollow element assembly further comprises an outlet aperture (25) that is spaced from the inlet aperture (24), and is arranged to allow excess welding material to exit the welding conduit.

3. A hollow element assembly as claimed in claim 2, wherein the inlet and outlet apertures are both located on the base of the assembly.

4. A hollow element assembly as claimed in any preceding claim, wherein the lid is curved and is arranged to abut the base such that the concave side faces the base.

5. A hollow element assembly as claimed in any preceding claim, wherein the edge of the wall and the contacting surface of the lid are additionally configured to provide an interlocking arrangement (26,34).

6. A hollow element assembly as claimed in any preceding claim, wherein the lid and base are formed from the same material.

7. A hollow element assembly as claimed in any of claims 1 to 5, wherein the lid is formed from a softer material than the base.

8. A hollow element assembly as claimed in any of claims 1 to 5, wherein the base is formed from a softer material than the lid.

9. An apparatus (50) for manufacturing a hollow element assembly according to any one of claims 1-8 and joining the hollow element assembly to form a hollow element, the apparatus comprising first and second dies (52,54),
the first and second dies having respective die faces (52a,54a) that are positioned facing each other, the first and second dies being movable across each other and additionally towards and away from each other,
the first and second dies each having at least one female die cavity (56a,58a) and at least one male die core (56b,58b),
the apparatus further having fluid delivery means for delivering fluid to at least one of the first and second die faces,
wherein, in a first configuration, the female die cavity (56a) in the first die (52) receives the male die core (58b) of the second die (54) to define a first mould (72), and the female die cavity (58a) in the second die (54) receives the male die core (56b) of the first die (52), to define a second mould (70), the first and second moulds being adapted to receive fluid from the fluid delivery means, to create moulded parts; and
wherein, in a second configuration, the female die cavities (56a,58a) of the first and second dies are aligned with each other to define a third mould that is adapted to receive fluid from the fluid delivery means, to join the moulded parts.

10. An apparatus according to claim 9, further comprising a pressure sensor (68) that is adapted to sense exit of fluid from the third mould.

11. An apparatus according to claim 9 or claim 10, wherein the first die (52) has a fixed position, the second die (54) being movable relative to the first die.

12. An apparatus according to claim 11, wherein the male die core (58b) of the second die (54) comprises ejection means for separating a moulded part from the male die core, so that the moulded part is retained in the female die cavity (56a) of the first die (52).

13. An apparatus according to any one of claims 9-12, comprising hydraulically-powered means for moving the first and second dies relative to each other.

14. A method for the manufacture of a hollow element assembly according to any one of claims 1-8 and for joining the hollow element assembly to form a hollow element, the method comprising the steps of
● providing an apparatus according to any one of claims 10-13;
● placing the apparatus in the first position, such that the female die cavity (56a) in the first die (52) receives the male die core (58b) of the second die (54), to define a first mould (72), and the female die cavity (58a) in the second die receives the male die core (56b) of the first die, to define a second mould (70);
● supplying molten material to the first and second moulds via the fluid delivery means to create moulded parts;
● moving the first and second dies (52,54) away from each other and subsequently across each other to the second position;
● contacting the first and second dies, whereby the female die cavities, each containing a moulded part, are aligned with each other to define a third mould that houses the hollow element assembly formed from the moulded parts; and
● actuating the fluid delivery means to deliver molten material to the welding conduit of the hollow element assembly and bond the base and lid of the assembly together, to provide a hollow element.

15. A method of manufacture according to claim 14, further comprising the step, between the step of moving the first and second dies to the second position, and the step of contacting the first and second dies, of placing an object or a filler material between the lid and base of the hollow element assembly.
